Europäisches Patentamt

European Patent Office

Office européen des brevets

(19)

(11) **EP 0 926 011 A1**

(12) ## DEMANDE DE BREVET EUROPEEN

(43) Date de publication:
**30.06.1999 Bulletin 1999/26**

(51) Int. Cl.6: **B60R 19/40**

(21) Numéro de dépôt: 98403291.2

(22) Date de dépôt: **23.12.1998**

(84) Etats contractants désignés:
AT BE CH CY DE DK ES FI FR GB GR IE IT LI LU
MC NL PT SE
Etats d'extension désignés:
AL LT LV MK RO SI

(30) Priorité: **23.12.1997 FR 9716400**

(71) Demandeur:
ECIA - EQUIPEMENTS ET COMPOSANTS
POUR L'INDUSTRIE AUTOMOBILE
F-25400 Audincourt (FR)

(72) Inventeurs:
• Rapy, Pierre-Yves
90000 Belfort (FR)
• Thevenin, Philippe
25700 Valentigney (FR)

(74) Mandataire:
de la Bigne, Guillaume Michel Marie et al
c/o Cabinet Lavoix,
2, place d'Estienne d'Orves
75441 Paris Cedex 09 (FR)

(54) **Procédé de commande d'un pare-chocs déployable de véhicule automobile**

(57) Le pare-chocs (12) est déployable longitudinalement suivant une course L en cas de choc entre le véhicule (10) et un obstacle (14). Selon le procédé, on effectue périodiquement un test conditionnant le déploiement du pare-chocs à partir d'au moins une grandeur mesurée à des dates successives $t_0, t_1, ..., t_n$ de période $\Delta T$. Lors de chaque test correspondant à une date $t_n$ de mesure, on calcule, dans un repère donné (R), la valeur estimée $D_e$ d'au moins une coordonnée de la position de l'obstacle (14) par rapport au véhicule (10) à la date future $t_e = t_n + \Delta T + \Delta T'$, $\Delta T'$ étant une période tampon au moins égale au temps nécessaire, à compter de la dernière date de mesure précédant un déploiement du pare-chocs (12), pour que ce pare-chocs (12) soit en position déployée, si $D_e$ est inférieur ou égal à un seuil $D_s$ prédéterminé, alors on déploie le pare-chocs (12) éventuellement sous condition.

FIG.2

## Description

La présente invention concerne un procédé de commande d'un pare-chocs déployable de véhicule automobile.

Un pare-chocs déployable est décrit par exemple dans EP-A-0 535 175. Dans ce document, on propose de conditionner le déploiement du pare-chocs au résultat d'un test prenant en compte au moins une grandeur, liée à la cinématique ou à la position du véhicule ou de l'obstacle, mesurée à l'aide d'un capteur ou d'un détecteur approprié.

L'invention a pour but d'optimiser la commande d'un pare-chocs déployable de véhicule automobile de manière que le déploiement de ce pare-chocs n'ait lieu que dans des circonstances justifiées, notamment le plus tard possible avant un choc entre un obstacle et le véhicule.

A cet effet, l'invention a pour objet un procédé de commande d'un pare-chocs de véhicule automobile déployable longitudinalement suivant une course L en cas de risque de choc entre le véhicule et un obstacle, du type dans lequel on effectue périodiquement un test conditionnant le déploiement du pare-chocs à partir d'au moins une grandeur mesurée à des dates successives $t_0, t_1, ..., t_n$ de période $\Delta T$,

**caractérisé en ce que,** lors de chaque test correspondant à une date $t_n$ de mesure,

on calcule, dans un repère donné, la valeur estimée $D_e$ d'au moins une coordonnée de la position de l'obstacle par rapport au véhicule à la date future $t_e = t_n + \Delta T + \Delta T'$, $\Delta T'$ étant une période tampon au moins égale au temps nécessaire, à compter de la dernière date de mesure précédant un déploiement du pare-chocs, pour que ce pare-chocs soit en position déployée,

si $D_e$ est inférieur ou égal à un seuil $D_s$ prédéterminé, alors on déploie le pare-chocs éventuellement sous condition.

Suivant d'autres caractéristiques de ce procédé:

- on déploie le pare-chocs à condition que la vitesse relative de l'obstacle par rapport au véhicule soit supérieure à un seuil prédéterminé ;
- si $D_e$ est inférieur ou égal au seuil $D_s$ prédéterminé, alors on calcule dans le repère donné la valeur estimée $V_e^R$ d'au moins une coordonnée de la vitesse relative de l'obstacle par rapport au véhicule à laquelle devrait se produire le choc entre l'obstacle et le véhicule, et

si $|V_e^R|$ est supérieure ou égale à un seuil prédéterminé $V_s^R$, alors on déploie le pare-chocs ;

- à partir de grandeurs mesurées aux dates $t_0, t_1, ..., t_n$, on détermine dans le repère donné des valeurs successives $D_0, D_1, ..., D_n$ de la coordonnée de position relative et des valeurs successives $V_0^R, V_1^R, ..., V_n^R$ de la coordonnée de vitesse relative, et l'on calcule, d'une part, $D_e$ en fonction de $D_n, V_n^R$ et $V_{n-1}^R$, et d'autre part, $V_e^R$ en fonction de $V_n^R$ et $V_{n-1}^R$ ;
- le repère choisi est un repère axial lié au véhicule comportant un axe longitudinal du véhicule orienté de l'arrière vers l'avant de ce véhicule, $D_0, D_1, ..., D_n, V_0^R, V_1^R, ..., V_n^R, D_e$ et $V_e^R$ étant des valeurs algébriques considérées sur cet axe, et :

$$D_e = D_n + \tilde{V}_n^R (\Delta T + \Delta T') + \tilde{\gamma}_n^R \frac{(\Delta T + \Delta T')^2}{2}$$

$$|V_e^R| = [(\tilde{V}_n^R)^2 - 2\tilde{\gamma}_n^R D_n]^{1/2}$$

avec, par approximation, $\tilde{\gamma}_n^R = \gamma_n^R = \dfrac{V_n^R - V_{n-1}^R}{\Delta T}$ et $\tilde{\gamma}_n^R = V_n^R$

- les mesures successives sont effectuées par des moyens formant détecteur et le test est réalisé par un algorithme mis en oeuvre par des moyens formant calculateur (18), et $\Delta T' = \Delta t_d + \Delta t_c + \Delta t_s$,

$\Delta t_d$ étant au moins égal au temps de traitement périodique des mesures par le détecteur,
$\Delta t_c$ étant au moins égal au temps de traitement de l'algorithme par le calculateur, et
$\Delta t_s$ étant au moins égal au temps de parcours de la course L par le pare-chocs ;

- $D_s = (1+\alpha)L$ avec $0 \leq \alpha \leq 1$ ;
- à chaque date $t_n$, on mesure la distance entre l'obstacle et le véhicule et la vitesse relative de l'obstacle par rapport au véhicule.

L'invention sera mieux comprise à la lecture de la description qui va suivre, donnée uniquement à titre d'exemple et faite en se référant aux dessins dans lesquels:

- la figure 1 est une vue schématique de dessus d'un véhicule automobile muni d'un pare-chocs déployable ;
- la figure 2 est un schéma spatio-temporel illustrant des paramètres utilisés au cours du test ;
- la figure 3 est un schéma synoptique de l'algorithme réalisant le test.

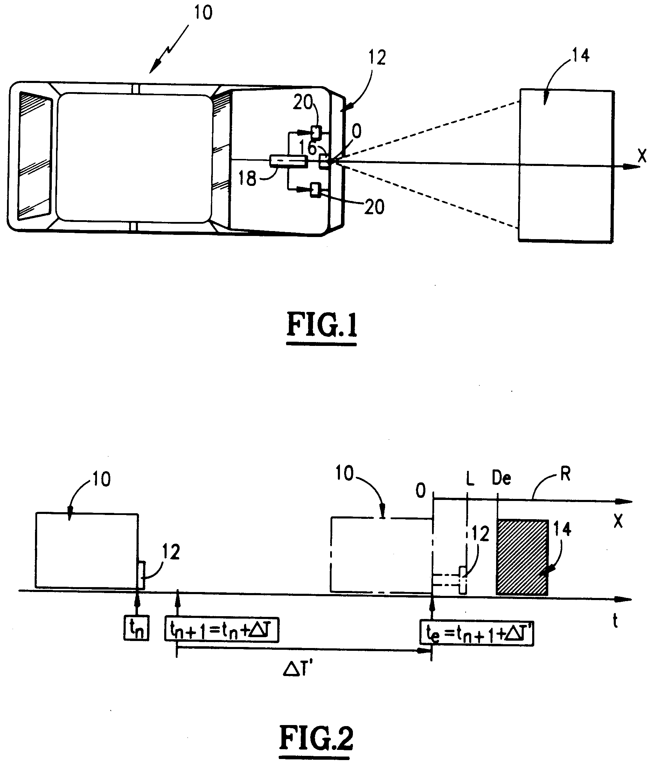

On a représenté sur la figure 1 un véhicule automobile 10 muni d'un pare-chocs 12 déployable longitudinalement en cas de risque de choc entre ce véhicule 10 et un obstacle fixe ou mobile 14.

Le pare-chocs 12, disposé à l'avant du véhicule 10, est d'un type classique décrit par exemple dans EP-A-0 535 175.

Le véhicule 10 comporte des moyens formant détecteur 16, par exemple un radar, destinés à effectuer la mesure d'au moins une grandeur appropriée, des moyens formant calculateur 18 destinés notamment à effectuer des calculs à partir d'informations provenant du détecteur 16, et des moyens formant actionneurs 20, commandés par le calculateur 18, destinés à déployer longitudinalement le pare-chocs 12 suivant une course L illustrée notamment sur la figure 2. Cette course est par exemple égale à 200 mm.

Pour commander le pare-chocs 12, on effectue périodiquement un test conditionnant le déploiement de ce pare-chocs. Ce test est réalisé à partir d'au moins une grandeur mesurée par le détecteur 16 à des dates successives $t_0$, $t_1$,...,...,$t_n$ de période $\Delta T$. Cette période est par exemple égale à 50 ms.

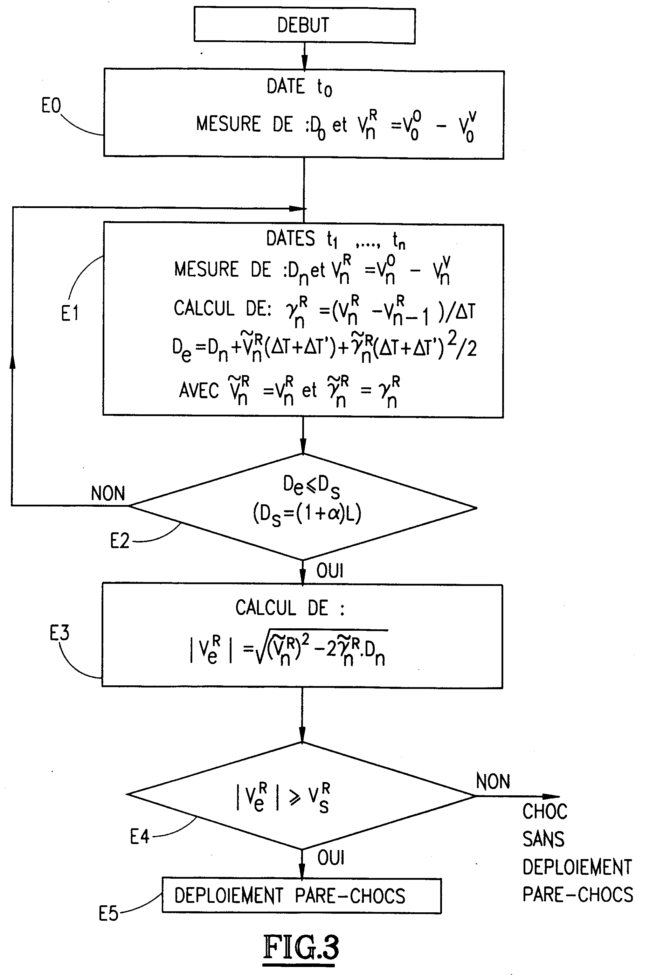

Le test est réalisé par un algorithme, illustré sur la figure 3, mis en oeuvre par le calculateur 18.

Sur cette dernière figure, on a représenté six étapes principales E0 à E5 de l'algorithme. La première étape E0 correspond au seuil de détection du radar.

Lors de chaque test correspondant à une date $t_n$ de mesure, on calcule, dans un repère donné R, la valeur estimée $D_e$ d'au moins une coordonnée de la position relative de l'obstacle 14 par rapport au véhicule 10 à la date future $t_e = t_{n+1} + \Delta T'$, $t_{n+1}$ étant égal à $t_n + \Delta T$ et $\Delta T'$ étant une période tampon (étape E1). $\Delta T'$ est au moins égal au temps nécessaire, à compter de la dernière date de mesure précédant la commande de déploiement du pare-chocs, pour que ce pare-chocs soit en position déployée. De préférence $\Delta T'$ est calculé par la relation suivante:

$$\Delta T' = \Delta t_d + \Delta t_c + \Delta t_s$$

$\Delta t_d$ étant au moins égal au temps de traitement périodique des mesures par le détecteur 16, $\Delta t_c$ étant au moins égal au temps de traitement de l'algorithme par le calculateur 18 et $\Delta t_s$ étant au moins égal au temps de parcours de la course L par le pare-chocs 12.

Puis on compare $D_e$ avec un seuil prédéterminé $D_s$ vérifiant la relation $D_s = (1+\alpha)L$, $\alpha$ étant un coefficient de sécurité vérifiant de préférence $0 \leq \alpha \leq 1$.

Si $D_e$ est inférieur ou égale au seuil $D_s$, alors on déploie le pare-chocs 12 éventuellement sous condition.

De préférence, on déploie ce pare-chocs 12 à condition que la vitesse relative de l'obstacle 14 par rapport au véhicule 10, au moment du choc, soit supérieure à un seuil prédéterminé.

Ainsi, lors de chaque test correspondant à une date $t_n$ de mesure, si $D_e$ est inférieur ou égal au seuil $D_s$ prédéterminé, alors on calcule dans le repère donné la valeur estimée $V_e^R$ d'au moins une coordonnée de la vitesse relative de l'obstacle 14 par rapport au véhicule 10 à laquelle devrait se produire le choc entre cet obstacle et ce véhicule (étapes E2 et E3).

Si $|V_e^R|$ est supérieure ou égale à un seuil prédéterminé $V_s^R$, alors on déploie le pare-chocs 12 (étapes E4 et E5).

Sur la figure 2 on a représenté schématiquement le véhicule 10 d'une part, en traits pleins dans sa position connue à la date de mesure $t_n$, et d'autre part, en traits mixtes dans sa position estimée à la date $t_e$.

Pour calculer les valeurs $D_e$ et $V_e^R$ dans un repère donnée R, on procède de la façon suivante.

A partir de grandeurs mesurées aux dates $t_0$,$t_1$,...,$t_n$, on détermine dans le repère donné R des valeurs successives $D_0$,$D_1$,...,$D_n$ de la coordonnée de position relative et des valeurs successives $V_0^R$, $V_1^R$,... $V_n^R$ de la coordonnée de vitesse relative. Puis, on calcule d'une part, $D_e$ en fonction de $D_n$, $V_n^R$ et $V_{n-1}^R$, et d'autre part, $V_e^R$ en fonction de $V_n^R$ et $V_{n-1}^R$.

De préférence, à chaque date $t_n$, le détecteur 16 mesure, dans le repère R, la distance entre l'obstacle 14 et le véhicule 10 et la vitesse relative de l'obstacle 14 par rapport au véhicule 10.

Dans l'exemple illustré, le repère choisi est un repère axial R(O,X) dans lequel l'axe X est un axe longitudinal du véhicule 10 orienté de l'arrière vers l'avant du véhicule. L'origine O du repère R est placée, par exemple, à proximité du détecteur 16 aligné avec l'axe X.

On notera que dans le repère R(O,X) la distance entre l'obstacle 14 et le véhicule 10 correspond à la coordonnée unique dans R(O,X) de la position de cet obstacle 14 par rapport au véhicule 10.

$D_e$ et $V_e^R$ sont calculés grâce aux relations suivantes (en considérant les valeurs algébriques sur l'axe X de $D_0, D_1, ..., D_n, V_0^R, V_1^R, ... V_n^R$):

$$D_e = D_n + \tilde{V}_n^R (\Delta T + \Delta T') + \tilde{\gamma}_n^R \frac{(\Delta T + \Delta T')^2}{2}$$

$$|V_e^R| = [(\tilde{V}_n^R)^2 - 2\tilde{\gamma}_n^R D_n]^{1/2}$$

avec, par approximation, $\tilde{\gamma}_n^R = \gamma_n^R = \frac{V_n^R - V_{n-1}^R}{\Delta T}$ et $\tilde{\gamma}_n^R = V_n^R$

En variante, d'autres valeurs d'approximation de $\tilde{V}_n^R$ et $\tilde{\gamma}_n^R$, différentes de $V_n^R$ et $\gamma_n^R$, pourraient être choisies.

On décrira maintenant en détail les étapes E0 à E5 de l'algorithme de commande du pare-chocs déployable.

Au cours de l'étape initiale E0, l'obstacle est pris en compte par le détecteur 16 à la date $t_0$. A cette date, le détecteur 16 mesure dans le repère R la distance $D_0$ entre l'obstacle et le véhicule et la vitesse relative

$$V_0^R = V_0^O - V_0^V$$

de l'obstacle par rapport au véhicule.

Au cours de l'étape E1, pour chaque date $t_1, ... t_n$, le détecteur 16 mesure la distance $D_n$ entre l'obstacle et le véhicule et la vitesse relative

$$V_n^R = V_n^O - V_n^V$$

de l'obstacle par rapport au véhicule, puis le calculateur 18 calcule $D_e$ et $\gamma_n^R$ à l'aide des relations précisées plus haut.

Au cours de l'étape E2, le calculateur 18 compare $D_e$ et le seuil $D_s$. Si $D_e$ est supérieur à $D_s$, alors le calculateur 18 revient a l'étape E1. Dans le cas contraire, le calculateur 18 passe à l'étape E3.

Au cours de l'étape E3, le calculateur 18 calcule $|V_e^R|$ grâce à la relation précisée plus haut. Au cours de l'étape E4, le calculateur 18 compare $|V_e^R|$ et le seuil $V_s^R$. Si $|V_e^R|$ est inférieur à $V_s^R$, alors le choc entre l'obstacle et le véhicule aura lieu sans déploiement du pare-chocs 12. Dans le cas contraire, le calculateur 18 commande les actionneurs 20 et le pare-chocs 12 est déployé (étape E5).

L'invention ne se limite pas au mode de réalisation décrit précédemment.

En particulier, le repère pour déterminer au moins une coordonnée de la position de l'obstacle par rapport au véhicule et au moins une coordonnée de la vitesse relative de l'obstacle par rapport à ce véhicule n'est pas nécessairement axial. Ce repère peut être par exemple plan.

Les grandeurs mesurées par le détecteur 16 peuvent être diverses. En particulier, ce dernier peut mesurer des accélérations absolues du véhicule ou une accélération relative à partir desquelles on détermine par calcul une vitesse relative de l'obstacle par rapport au véhicule.

**Revendications**

1.  Procédé de commande d'un pare-chocs (12) de véhicule automobile (10) déployable longitudinalement suivant une course L en cas de risque de choc entre le véhicule (10) et un obstacle (14), du type dans lequel on effectue périodiquement un test conditionnant le déploiement du pare-chocs (12) à partir d'au moins une grandeur mesurée à des dates successives $t_0, t_1, ..., t_n$ de période $\Delta T$,

    **caractérisé en ce que,** lors de chaque test correspondant à une date $t_n$ de mesure,

    on calcule, dans un repère donné (R), la valeur estimée $D_e$ d'au moins une coordonnée de la position relative de l'obstacle (14) par rapport au véhicule (10) à la date future $t_e = t_n + \Delta T + \Delta T'$, $\Delta T'$ étant une période tampon au moins égale au temps nécessaire, à compter de la dernière date de mesure précédant un déploiement du pare-chocs (12), pour que ce pare-chocs (12) soit en position déployée,

si $D_e$ est inférieur ou égal à un seuil $D_s$ prédéterminé, alors on déploie le pare-chocs (12) éventuellement sous condition.

2. Procédé selon la revendication 1, caractérisé en ce que l'on déploie le pare-chocs (12) à condition que la vitesse relative de l'obstacle (14) par rapport au véhicule (10) soit supérieure à un seuil prédéterminé.

3. Procédé selon la revendication 2, caractérisé en ce que,

si $D_e$ est inférieur ou égal au seuil $D_s$ prédéterminé, alors on calcule dans le repère donné la valeur estimée $V_e^R$ d'au moins une coordonnée de la vitesse relative de l'obstacle (14) par rapport au véhicule (10) à laquelle devrait se produire le choc entre l'obstacle et le véhicule, et
si $|V_e^R|$ est supérieure ou égale à un seuil prédéterminé $V_s^R$, alors on déploie le pare-chocs (12).

4. Procédé selon la revendication 3, caractérisé en ce qu'à partir de grandeurs mesurées aux dates $t_0, t_1, ..., t_n$, on détermine dans le repère donné (R) des valeurs successives $D_0, D_1, ..., D_n$ de la coordonnée de position relative et des valeurs successives $V_0^R, V_1^R, ..., V_n^R$ de la coordonnée de vitesse relative, et en ce que l'on calcule, d'une part, $D_e$ en fonction de $D_n, V_n^R$ et $V_{n-1}^R$, et d'autre part, $V_e^R$ en fonction de $V_n^R$ et $V_{n-1}^R$.

5. Procédé selon la revendication 4, caractérisé en ce que le repère choisi (R) est un repère axial lié au véhicule (10) comportant un axe longitudinal (X) du véhicule orienté de l'arrière vers l'avant de ce véhicule, $D_0, D_1, ..., D_n, V_0^R, V_1^R, ..., V_n^R, D_e$ et $V_e^R$ étant des valeurs algébriques considérées sur cet axe (X), et en ce que :

$$D_e = D_n + \tilde{V}_n^R (\Delta T + \Delta T') + \tilde{\gamma}_n^R \frac{(\Delta T + \Delta T')^2}{2}$$

$$|V_e^R| = [(\tilde{V}_n^R)^2 - 2\tilde{\gamma}_n^R D_n]^{1/2}$$

avec, par approximation, $\tilde{\gamma}_n^R = \gamma_n^R = \dfrac{V_n^R - V_{n-1}^R}{\Delta T}$ et $\tilde{\gamma}_n^R = V_n^R$

6. Procédé selon l'une quelconque des revendications 1 à 5, caractérisé en ce que les mesures successives sont effectuées par des moyens formant détecteur (16) et le test est réalisé par un algorithme mis en oeuvre par des moyens formant calculateur (18), et en ce que $\Delta T' = \Delta t_d + \Delta t_c + \Delta t_s$,

$\Delta t_d$ étant au moins égal au temps de traitement périodique des mesures par le détecteur (16),
$\Delta t_c$ étant au moins égal au temps de traitement de l'algorithme par le calculateur (18), et
$\Delta t_s$ étant au moins égal au temps de parcours de la course L par le pare-chocs (12).

7. Procédé selon l'une quelconque des revendications 1 à 6, caractérisé en ce que $D_s = (1 + \alpha)L$ avec $0 \leq \alpha \leq 1$.

8. Procédé selon l'une quelconque des revendications 1 à 7, caractérisé en ce que, à chaque date $t_n$, on mesure la distance entre l'obstacle (14) et le véhicule (10) et la vitesse relative de l'obstacle (14) par rapport au véhicule (10).

## FIG.1

## FIG.2

DEBUT

E0

DATE $t_0$

MESURE DE : $D_0$ et $V_n^R = V_0^O - V_0^V$

E1

DATES $t_1$ ,...., $t_n$

MESURE DE : $D_n$ et $V_n^R = V_n^O - V_n^V$

CALCUL DE : $\gamma_n^R = (V_n^R - V_{n-1}^R)/\Delta T$

$D_e = D_n + \widetilde{V}_n^R(\Delta T + \Delta T') + \widetilde{\gamma}_n^R(\Delta T + \Delta T')^2/2$

AVEC $\widetilde{V}_n^R = V_n^R$ et $\widetilde{\gamma}_n^R = \gamma_n^R$

E2

NON

$D_e \leqslant D_S$
$(D_S = (1+\alpha)L)$

OUI

E3

CALCUL DE :

$|V_e^R| = \sqrt{(\widetilde{V}_n^R)^2 - 2\widetilde{\gamma}_n^R . D_n}$

E4

$|V_e^R| \geqslant V_S^R$

NON

CHOC
SANS
DEPLOIEMENT
PARE-CHOCS

OUI

E5

DEPLOIEMENT PARE-CHOCS

## FIG.3

**Office européen des brevets**

## RAPPORT DE RECHERCHE EUROPEENNE

Numéro de la demande

EP 98 40 3291

### DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| A | US 5 646 613 A (CHO) 8 juillet 1997<br>* colonne 3, ligne 21 - colonne 5, ligne 14; revendication 17; figures 1-4 *<br>* colonne 6, ligne 30 - ligne 61; figure 15 *<br>--- | 1,6-8 | B60R19/40 |
| A | US 5 285 188 A (YOSHIDA) 8 février 1994<br>* le document en entier *<br>--- | 1,8 | |
| A | DE 41 28 230 A (KANTO SEIKI CO. LTD.) 21 mai 1992<br>* page 10, ligne 59 - page 11, ligne 57; figures 8,10A,10B *<br>--- | 1 | |
| A | GB 2 311 966 A (R.J. DESIGNRIGHTS LTD) 15 octobre 1997<br>* page 13, alinéa 1; figures 12,13 *<br>--- | 1,2,8 | |
| A | US 3 789 950 A (STRENGLEIN) 5 février 1974<br>* abrégé; figure *<br>* colonne 4, ligne 6 - colonne 5, ligne 12 *<br>* colonne 5, ligne 64 - ligne 68 *<br>----- | 1,2,8 | **DOMAINES TECHNIQUES RECHERCHES (Int.Cl.6)**<br><br>B60R<br>G01S |

Le présent rapport a été établi pour toutes les revendications

| Lieu de la recherche | Date d'achèvement de la recherche | Examinateur |
|---|---|---|
| LA HAYE | 15 avril 1999 | Dubois, B |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**            EP 98 40 3291

La présente annexe indique les membres de la famille de brevets relatifs aux documents brevets cités dans le rapport de
recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

15-04-1999

| Document brevet cité au rapport de recherche | Date de publication | Membre(s) de la famille de brevet(s) | | Date de publication |
|---|---|---|---|---|
| US 5646613 A | 08-07-1997 | AU | 3126597 A | 09-12-1997 |
| | | WO | 9744216 A | 27-11-1997 |
| US 5285188 A | 08-02-1994 | JP | 4361163 A | 14-12-1992 |
| DE 4128230 A | 21-05-1992 | JP | 2097642 C | 02-10-1996 |
| | | JP | 5038997 A | 19-02-1993 |
| | | JP | 7112809 B | 06-12-1995 |
| | | JP | 2076261 C | 25-07-1996 |
| | | JP | 4143146 A | 18-05-1992 |
| | | JP | 7098467 B | 25-10-1995 |
| | | JP | 2110075 C | 21-11-1996 |
| | | JP | 4191143 A | 09-07-1992 |
| | | JP | 8022664 B | 06-03-1996 |
| | | JP | 4191144 A | 09-07-1992 |
| | | JP | 8025431 B | 13-03-1996 |
| | | JP | 2091849 C | 18-09-1996 |
| | | JP | 4191146 A | 09-07-1992 |
| | | JP | 8000519 B | 10-01-1996 |
| | | JP | 2087617 C | 02-09-1996 |
| | | JP | 4191147 A | 09-07-1992 |
| | | JP | 7112808 B | 06-12-1995 |
| | | JP | 2091850 C | 18-09-1996 |
| | | JP | 4191148 A | 09-07-1992 |
| | | JP | 8000520 B | 10-01-1996 |
| | | JP | 2114780 C | 06-12-1996 |
| | | JP | 4191151 A | 09-07-1992 |
| | | JP | 8032513 B | 29-03-1996 |
| | | US | 5787377 A | 28-07-1998 |
| | | JP | 2545012 B | 16-10-1996 |
| | | JP | 5147497 A | 15-06-1993 |
| | | DE | 69205067 D | 02-11-1995 |
| | | DE | 69205067 T | 21-03-1996 |
| | | EP | 0517253 A | 09-12-1992 |
| | | US | 5365114 A | 15-11-1994 |
| | | JP | 4176746 A | 24-06-1992 |
| | | JP | 8025430 B | 13-03-1996 |
| GB 2311966 A | 15-10-1997 | AUCUN | | |
| US 3789950 A | 05-02-1974 | AUCUN | | |

Pour tout renseignement concernant cette annexe : voir Journal Officiel de l'Office européen des brevets, No.12/82